# EUROPEAN PATENT APPLICATION

(11) **EP 1 722 503 A1**
(43) Date of publication of application: **15.11.2006**
(21) Application number: 05010526.1
(22) Date of filing: 13.05.2005
(51) Int. Cl.: H04L 9/08, H04L 29/06, H04L 9/32, H04L 12/28, H04L 12/56

(54) **Method used by an access point of a wireless LAN and related apparatus**

(71) Applicant: DrayTek Corp., Hsin-Chu Industrial Park, Hsin-Chu, Hsien (TW)
(72) Inventor: Shih, Chih-Heng, Tai-Chung City (TW)
(74) Representative: Weber, Joachim

(57) **Abstract**

The present invention discloses a method used by an Authenticator (110) of a wireless LAN. The Authenticator (110) is capable of communicating wirelessly with a Supplicant (120) of the wireless LAN. The Authenticator (110) holds a plurality of candidate keys whereas the Supplicant (120) holds one key. The key held by the Supplicant (120) is included in the plurality of candidate keys held by the Authenticator. The method includes determining which one of the plurality of candidate keys is the key held by the Supplicant (120) and communicating with the Supplicant (120) wirelessly according to the determined key held by the Supplicant (120).

## Description

The present invention relates a method used by an access point of a wireless LAN and related apparatus according to the pre-characterizing clause of claim 1.

In recent years, wireless technology has been a boon for both business and home users. However, with wireless data transmission, there is the risk of personal data being exposed. In order to increase transmission security, it has been suggested that a special key should be utilized for ciphering/deciphering data transmitted through a wireless LAN. With the development of wireless LAN technology, the industry has also come up with several security standards, such as the IEEE 802.11 i and Wi-Fi Protected Access (WPA) standards.

In the IEEE 802.11i/WPA standard, two authentication types are defined, IEEE 802.1x and pre-shared key (PSK). Under the architecture of IEEE 802.1x an authentication server, such as a Remote Authentication Dial-In Service (RADIUS server) is necessary for a wireless local area network (WLAN) environment. For PSK authentication, a plurality of wireless clients (also referred to as Supplicants in the following description) and an access point (AP, or also referred to as an Authenticator in the following description) in a wireless local area network utilizes a common pairwise master key (PMK) for data authentication and encryption. Under this architecture, an information leakage may occur if any one of the Supplicants is no longer trustworthy. Consequently, a new PMK must be reinstalled in all remaining Supplicants and the Authenticator in order to ensure further transmission safety.

This in mind, the present invention aims at providing a method used by a wireless LAN Authenticator for increasing internet security.

This is achieved by a method used by an Authenticator of a wireless LAN under the architecture of PSK authentication according to claim 1. The dependent claims pertain to corresponding further developments and improvements.

As will be seen more clearly from the detailed description following below, the method used by an Authenticator of a wireless LAN under the architecture of PSK authentication is disclosed. The Authenticator holds a plurality of candidate keys, each Supplicant holds one key, and the key held by the Supplicant is one of candidate keys held by the Authenticator. The method includes the following steps:
(a) determining which one of the candidate keys is the key held by each Supplicant; and
(b) communicating with each Supplicant wirelessly according to the determined key held by the Supplicant.

A wireless local area network (WLAN) is also disclosed according to the present invention. The wireless LAN comprises: a client (also referred to as Supplicant) holding a key; and an access point (also referred to as Authenticator) holding a plurality of candidate keys, in which the key held by the Supplicant is included in the plurality of candidate keys held by the Authenticator. The Authenticator is capable of determining which one of the plurality of candidate keys is the key held by the Supplicant and establishing a wireless communication with the Supplicant according to the determined key.

In the following, the invention is further illustrated by way of example, taking reference to the accompanying drawings. Thereof
Fig. 1 is a perspective diagram showing a 4-way handshake between an Authenticator and a Supplicant according to the present invention, and
Fig. 2 is a second perspective diagram showing a 4-way handshake between an Authenticator and a Supplicant according to the present invention.

In a wireless LAN environment, before a Supplicant establishes a wireless connection for transferring data to an Authenticator under the PSK mode, the Supplicant needs to perform a 4-way handshake with the Authenticator to confirm that the PMKs held by them are the same and is live, and to generate a key used for a unicast communication (refers to a wireless communication established between a single Supplicant and the Authenticator). A group key used by the Authenticator for establishing a broadcast communication among multiple Supplicants on the other hand can be generated by a group key handshake.

By utilizing the method disclosed by the present invention, under the IEEE 802.11 i/WPA PSK mode, an Authenticator of a wireless LAN is allowed to hold a plurality (more than one) of candidate keys (each key being a different PMK), and different Supplicants (or different Supplicant sets, in which each Supplicant set includes at least one Supplicant) are allowed to hold different PMKs. By doing so, each Supplicant (or Supplicant set) is unable to know PMKs held by other Supplicants (or Supplicant sets), and even if any Supplicant (or Supplicant set) becomes untrustworthy, the Authenticator and other remaining Supplicants are still able to establish a secure wireless communication.

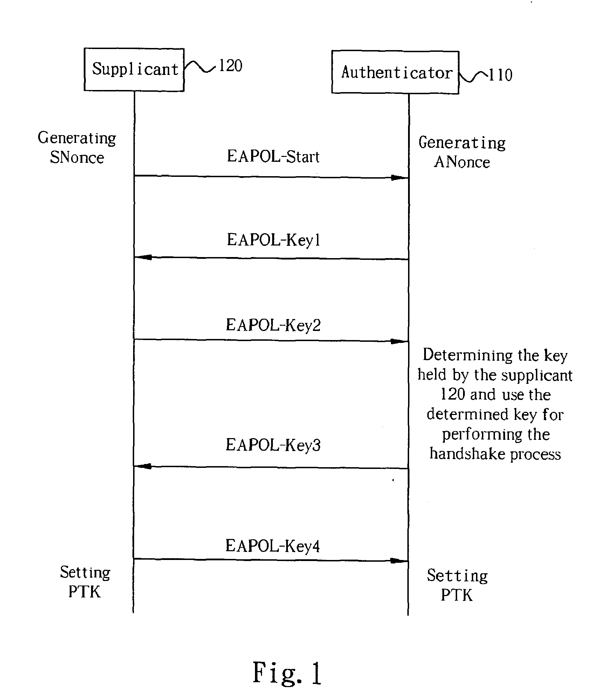

Fig. 1 is a perspective diagram showing a 4-way handshake between an Authenticator 110 and a Supplicant 120 according to the present invention. As shown in the figure, the Supplicant 120 holds a key (the key being a PMK) and the Authenticator 110 holds a plurality of candidate keys (each candidate key being a different PMK), and the key held by the Supplicant 120 is among the plurality of keys held by the Authenticator 110 (however before the 4-way handshake is performed, the Authenticator 110 is unaware of which one of the plurality of candidate keys is the key held by the Supplicant 120). According to the method proposed by the present invention, the Authenticator 110 is able to determine which one of the candidate keys is the key held by the Supplicant 120 during a 4-way handshake and establish a wireless communication with the Supplicant 120 according to the key held by the Supplicant 120 (to be more precisely, a pairwise transient key (PTK) is calculated according to the PMK key held by the Supplicant 120 for establishing a wireless communication with the Supplicant 120).

As shown in Fig. 1, the Supplicant 120 first sends an EAPOL-Start packet (EAPOL being Extensible Authentication Protocol Over LAN) to the Authenticator 110 to initiate the 4-way handshake. The Authenticator 110 will then generate a random value ANonce after the EAPOL-Start packet is received and send ANonce to the Supplicant 120 through the first packet in the 4-way handshake, EAPOL-Keyl. Upon receiving EAPOL-Keyl, the Supplicant 120 also generates a random value SNonce and substitute ANonce, SNonce, its own PMK, and other related values into an equation (such as PRF-512, in which PRF is abbreviated for Pseudo Random Function) for generating a pairwise transient key (PTK). The first 128 bits of the PTK (also referred to as a key confirmation key (KCK)) is used to generate an integrity check value for verifying the packet content of the 4-way handshake. The integrity check value is referred to as the message integrity code (MIC).

Next, the Supplicant 120 will generate the second packet in the 4-way handshake, EAPOL-Key2, in which the SNonce and the integrity check value (MIC) of the packet will be enclosed, and send it to the Authenticator 110. If the prior art method is used, upon receiving EAPOL-Key2, the Authenticator 110 will also substitute ANonce, SNonce, its own PMK, and other related values into the same equation used by the Supplicant (such as PRF-512) to generate a PTK, use the KCK in the PTK to calculate the MIC of EAPOL-Key2, and compare the calculated value with the MIC value enclosed in EAPOL-Key2. If both Supplicant 120 and Authenticator 110 hold the same PMK, since the parameters substituted by both parties into the equation are the same, the MIC generated by both parties should also be the same. Through this way, the Authenticator 110 can verify if the Supplicant 120 holds the same PMK as it does. After finishing the following EAPOL-Key3 and EAPOL-Key4 exchange, the Authenticator 110 and the Supplicant 120 will install the generated PTK. Afterward, the unicast communication between the Authenticator 110 and the Supplicant 120 is encrypted based on the installation of PTK.

Under the architecture of the present invention, the Authenticator 110 is allowed to have a plurality of different candidate keys (each candidate key being a different PMK, in which only one of the candidate keys will be the key held by the Supplicant 120, and the Authenticator 110 does not know which one of the candidate keys is the key held by the Supplicant 120 in advance). The Authenticator 110 will utilize the integrity check value (MIC) in EAPOL-Key2 to determine which one of the candidate keys is the one held by the Supplicant 120 and complete the rest of the 4-way handshake with the Supplicant 120 successfully. In this example, after the second packet EAPOL-Key2 is received, the Authenticator 110 will substitute ANonce, SNonce, other related values, and each candidate key into the same equation (such as PRF-512) to generate a corresponding PTK. The candidate key, generating the same MIC value as the one enclosed in EAPOL-Key2, will be selected by the Authenticator as the PMK held by the Supplicant and used for the rest of the 4-way handshake.

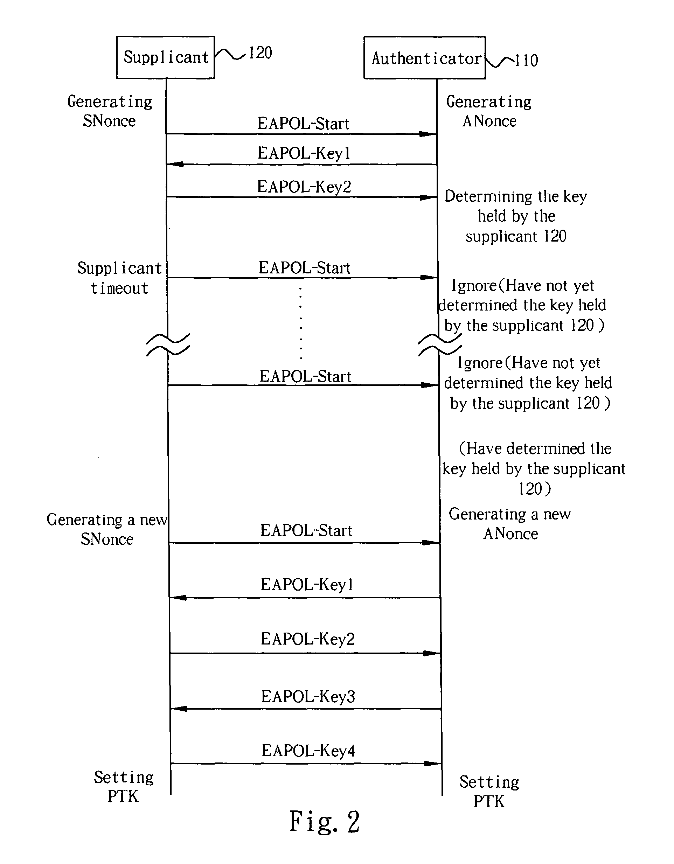

If the Authenticator t 110 holds a substantial number of candidate keys, a timeout is likely to occur in the Supplicant 120 and a new EAPOL-Start packet will be sent to the Authenticator 110 before the Authenticator 110 can determine the key held by the Supplicant 120. Under this condition, the present invention enables the Authenticator 110 to ignore the EAPOL-Start packet and continue the determination of the Supplicant key, and not until the key held by the Supplicant 120 is determined will a new 4-way handshake be resumed. Please refer to Fig. 2. Fig. 2 is a perspective diagram showing an interaction between the Authenticator 110 and the Supplicant 120 under this condition.

If a key collision (refers to a condition when more than one candidate keys generate the same MIC value as the one enclosed in EAPOL-Key2) takes place during a candidate key selection process, the Authenticator 110 will restart the 4-way handshake according to a new ANonce, a new SNonce, and a new MIC value is used for examining the keys involved in the collision until an unique candidate key corresponding to key used by the Supplicant can be determined.

It is also possible that the Authenticator 110 maintains a lookup table for storing a plurality of internet addresses (usually MAC addresses) of the Supplicant and candidate keys corresponding to each internet address. If the internet address of the Supplicant 120 and a corresponding key are already stored in the lookup table before a wireless communication is established with the Supplicant 120, the Authenticator 110 can use the key to perform the 4-way handshake with the Supplicant 120 (thereby avoiding the numerous trial and errors with each candidate key after EAPOL-Key2 is received). If the internet address of the Supplicant 120 and the corresponding candidate key are not stored in the lookup table, the Authenticator 110 will also perform the 4-way handshake with the Supplicant 120 according to the workflow from Fig. 1 and Fig. 2, and store the internet address of the Supplicant 120 and its corresponding candidate key into the lookup table after the key is determined.

According to the proposed method of the present invention, a normal wireless communication with an Authenticator can be established by simply providing a different key (a different PMK) to each different Supplicant (or different Supplicant set). Hence, if any one of the Supplicants (or Supplicant set) becomes untrustworthy, it is unnecessary to reset the keys owned by other trustworthy Supplicants since the key used by each Supplicant (or Supplicant set) is different. As a result, the transmission security and convenience to system maintenance are great increased.

## Claims

1. A method used by an Authenticator (110) of a wireless LAN under the architecture of PSK authentication **characterized in that** the Authenticator (110) holds a plurality of candidate keys, each Supplicant (120) holds one key, and the key held by the Supplicant (120) is one of candidate keys held by the Authenticator, the method comprising;
(a) determining which one of the candidate keys is the key held by the Supplicant (120); and
(b) communicating with the Supplicant (120) wirelessly according to the determined key held by the Supplicant (120).

2. The method of claim 1 **characterized in that** step (a) further comprising:
generating a random number and transmitting the random number to a Supplicant (120);
receiving a random number and a verification number from the Supplicant (120); and
calculating the corresponding integrity check values of the plurality of candidate keys according to the random number generated by the Authenticator (110) and the random number received from the Supplicant (120), and determining a candidate key corresponding to an integrity check value being the same as the verification number to be the key held by the Supplicant (120).

3. The method of claim 2 **characterized in that** step (a) further comprising:
creating a transmission key according to the random number generated by the Authenticator, the random number generated by the Supplicant (120), and the Supplicant key determined; and
step (b) further comprises:
using the transmission key for encrypting/decrypting data between the Authenticator (110) and the Supplicant (120).

4. The method of claim 3 **characterized in that** the transmission key is a pairwise transient key.

5. The method of claim 2 **characterized in that** if the Supplicant (120) has reached a time out before the Authenticator (110) has determined which of the plurality of candidate keys is the key held by the Supplicant (120), step (a) further comprises:
generating a new random number and transmitting the random number to a Supplicant (120);
receiving a new random number and a new verification number from the Supplicant (120); and
creating a transmission key according to the new random number generated by the Authenticator, the new random number generated by the Supplicant (120), and the Supplicant key determined; and step (b) further comprising:
using the transmission key for encrypting/decrypting data between the Authenticator (110) and the Supplicant (120).

6. The method of claim 5 **characterized in that** the transmission key is a pairwise transient key.

7. The method of claim 1 **characterized in that** the Authenticator (110) is able to access a lookup table, in which the lookup table stores a plurality of internet addresses and candidate keys corresponding to each internet address, and step (a) further comprises:
examining whether the internet address of the Supplicant (120) is stored in the lookup table; and
assigning the candidate key corresponding to the internet address of the Supplicant (120) to be the Supplicant key if the internet address of the Supplicant (120) is stored in the lookup table.

8. The method of claim 7 **characterized in that** if the internet address of the Supplicant (120) is not stored in the lookup table, the method further comprises:
storing the internet address of the Supplicant (120) and the key held by the Supplicant (120) to the lookup table after determining which one of the plurality of candidate keys is the key held by the Supplicant (120).

9. The method of claim 1 **characterized in that** step (a) further comprising:
assigning the candidate key that enables a 4-way handshake process between the Authenticator (110) and the Supplicant (120) from the plurality of candidate keys to be the key held by the Supplicant (120).

10. The method of claim 1 **characterized in that** the Supplicant (120) communicates wirelessly with the Authenticator (110) according to the IEEE 802.11i or Wi-Fi Protected Access standards.

11. The method of claim 10 **characterized in that** the wireless LAN is operated under a pre-shared key mode.

12. The method of claim 11 **characterized in that** the plurality of candidate keys are different pairwise master keys.

13. A wireless local area network (WLAN) **characterized in that** the network comprising:
a Supplicant (120) holding a key; and
an Authenticator (110) holding a plurality of candidate keys, in which the key held by the Supplicant (120) is included in the plurality of candidate keys held by the Authenticator;
wherein the Authenticator (110) is capable of determining which one of the candidate keys is the key held by the Supplicant (120) and establishing a wireless communication with the Supplicant (120) according to the determined key.

14. The wireless LAN of claim 13 **characterized in that** the Authenticator (110) sends a random number to a Supplicant (120), receives a random number and a verification number from the Supplicant (120), calculates the corresponding integrity check values of the plurality of candidate keys according to the random number generated by the Authenticator (110) and the random number received from the Supplicant (120), and determines a candidate key corresponding to an integrity check value being the same as the verification number to be the key held by the Supplicant (120).

15. The wireless LAN of claim 13 **characterized in that** the Authenticator (110) further comprises a storage device for storing a lookup table, in which the lookup table includes a plurality of internet addresses and candidate keys corresponding to each internet address; and the Authenticator (110) determines which one of the plurality of candidate keys is the key held by the Supplicant (120) according to the lookup table and an internet address of the Supplicant (120).

16. The wireless LAN of claim 15 **characterized in that** if the internet address of the Supplicant (120) is not stored in the lookup table, the Authenticator (110) determines which one of the plurality of candidate keys is the key held by the Supplicant (120) and store the internet address of the Supplicant (120) and the key held by the Supplicant (120) into the lookup table.

17. The wireless LAN of claim 13 **characterized in that** the Authenticator (110) assigns the candidate key that enables a 4-way handshake process between the Authenticator (110) and the Supplicant (120) from the plurality of candidate keys to be the key held by the Supplicant (120).

18. The wireless LAN of claim 13 **characterized in that** the Supplicant (120) communicates wirelessly with the Authenticator (110) according to the IEEE 802.11 i or Wi-Fi Protected Access standards.

19. The wireless LAN of claim 18 **characterized in that** the wireless LAN is operated under a pre-shared key mode.

20. The wireless LAN of claim 19 **characterized in that** the plurality of candidate keys are different pairwise master keys.

## Amended claims

### Amended claims in accordance with Rule 86(2) EPC.

**1.** A method used by an Authenticator (110) of a wireless LAN under the architecture of PSK authentication **characterized in that** the Authenticator (110) holds a plurality of candidate keys, each Supplicant (120) holds one key, and the key held by the Supplicant (120) is one of candidate keys held by the Authenticator, the method comprising;
(a) determining which one of the candidate keys is the key held by the Supplicant (120); and through:
generating a random number and transmitting the random number to a Supplicant (120);
receiving a random number and a verification number from the Supplicant (120); and
calculating the corresponding integrity check values of the plurality of candidate keys according to the random number generated by the Authenticator (110) and the random number received from the Supplicant (120), and
determining a candidate key corresponding to an integrity check value being the same as the verification number to be the key held by the Supplicant (120); and
(b) communicating with the Supplicant (120) wirelessly according to the determined key held by the Supplicant (120).

**2.** The method of claim 1, **characterized in that** step (a) further comprising:
creating a transmission key according to the random number generated by the Authenticator, the random number generated by the Supplicant (120), and the Supplicant key determined; and
step (b) further comprises:
using the transmission key for encrypting/decrypting data between the Authenticator (110) and the Supplicant (120).

**3.** The method of claim 2 **characterized in that** the transmission key is a pairwise transient key.

**4.** The method of claim 1, **characterized in that** if the Supplicant (120) has reached a time out before the Authenticator (110) has determined which of the plurality of candidate keys is the key held by the Supplicant (120), step (a) further comprises:
generating a new random number and transmitting the random number to a Supplicant (120);
receiving a new random number and a new verification number from the Supplicant (120); and
creating a transmission key according to the new random number generated by the Authenticator, the new random number generated by the Supplicant (120), and the Supplicant key determined; and step (b) further comprising:
using the transmission key for encrypting/decrypting data between the Authenticator (110) and the Supplicant (120).

**5.** The method of claim 4, **characterized in that** the transmission key is a pairwise transient key.

**6.** The method of claim 1, **characterized in that** the Authenticator (110) is able to access a lookup table, in which the lookup table stores a plurality of internet addresses and candidate keys corresponding to each internet address, and step (a) further comprises:
examining whether the internet address of the Supplicant (120) is stored in the lookup table; and
assigning the candidate key corresponding to the internet address of the Supplicant (120) to be the Supplicant key if the internet address of the Supplicant (120) is stored in the lookup table.

**7.** The method of claim 6, **characterized in that** if the internet address of the Supplicant (120) is not stored in the lookup table, the method further comprises:
storing the internet address of the Supplicant (120) and
the key held by the Supplicant (120) to the lookup table after determining which one of the plurality of candidate keys is the key held by the Supplicant (120).

**8.** The method of claim 1, **characterized in that** step (a) further comprising:
assigning the candidate key that enables a 4-way handshake process between the Authenticator (110) and the Supplicant (120) from the plurality of candidate keys to be the key held by the Supplicant (120).

**9.** The method of claim 1, **characterized in that** the Supplicant (120) communicates wirelessly with the Authenticator (110) according to the IEEE 802.11i or Wi-Fi Protected Access standards.

**10.** The method of claim 10, **characterized in that** the wireless LAN is operated under a pre-shared key mode.

**11.** The method of claim 10, **characterized in that** the plurality of candidate keys are different pairwise master keys.

**12.** A wireless local area network (WLAN) **characterized in that** the network comprising:
a Supplicant (120) holding a key; and
an Authenticator (110) holding a plurality of candidate keys, in which the key held by the Supplicant (120) is included in the plurality of candidate keys held by the Authenticator;
wherein the Authenticator (110) is capable of determining which one of the candidate keys is the key held by the Supplicant (120) through sending a random number to a Supplicant (120), receiving a random number and a
verification number from the Supplicant (120), calculating the corresponding integrity check values of the plurality of candidate keys according to the random number generated by the Authenticator (110) and the random number received from the Supplicant (120), and determining a candidate key corresponding to an integrity check value being the same as the verification number to be the key held by the Supplicant (120); and the Authenticator (110) is also capable of establishing a wireless communication with the Supplicant (120) according to the determined key.

**13.** The wireless LAN of claim 12, **characterized in that** the Authenticator (110) further comprises a storage device for storing a lookup table, in which the lookup table includes a plurality of internet addresses and candidate keys corresponding to each internet address; and the Authenticator (110) determines which one of the plurality of candidate keys is the key held by the Supplicant (120) according to the lookup table and an internet address of the Supplicant (120).

**14.** The wireless LAN of claim 13, **characterized in that** if the internet address of the Supplicant (120) is not stored in the lookup table, the Authenticator (110) determines which one of the plurality of candidate keys is the key held by the Supplicant (120) and store the internet address of the Supplicant (120) and the key held by the Supplicant (120) into the lookup table.

**15.** The wireless LAN of claim 12, **characterized in that** the Authenticator (110) assigns the candidate key that enables a 4-way handshake process between the Authenticator (110) and the Supplicant (120) from the plurality of candidate keys to be the key held by the Supplicant (120).

**16.** The wireless LAN of claim 12, **characterized in that** the Supplicant (120) communicates wirelessly with the Authenticator (110) according to the IEEE 802.11i or Wi-Fi Protected Access standards.

**17.** The wireless LAN of claim 16, **characterized in that** the wireless LAN is operated under a pre-shared key mode.

**18.** The wireless LAN of claim 17, **characterized in that** the plurality of candidate keys are different pairwise master keys.
